# FASCICULE DE BREVET EUROPEEN

(11) **EP 3 106 989 B1**
(45) Date de publication et mention de la délivrance du brevet: **27.10.2021**
(21) Numéro de dépôt: 16173976.8
(22) Date de dépôt: 10.06.2016
(51) Int. Cl.: G06F 11/34

(54) **PROCÉDÉ DE DÉTERMINATION D'UNE QUANTITÉ DE RESSOURCES DISPONIBLES GARANTISSANT UNE EXPÉRIENCE UTILISATEUR DE QUALITÉ**
VERFAHREN ZUR BESTIMMUNG EINER MENGE AN VERFÜGBAREN RESSOURCEN, DAS EINE QUALITATIV HOCHWERTIGE NUTZERERFAHRUNG GARANTIERT
METHOD FOR DETERMINING AN AMOUNT OF AVAILABLE RESOURCES ENSURING A QUALITY USER EXPERIENCE

(30) Priorité: 18.06.2015 FR 1555592
(43) Date de publication de la demande: 21.12.2016
(73) Titulaire: BULL SAS, 78340 Les Clayes sous Bois (FR)
(72) Inventeur: AIELLO, Damien, 38500 La Buisse (FR); CHAABANE, Waijh, 73000 Chambery (FR); ALVAREZ-MARCOS, José-Ignacio, 69220 Saint Jean d'Ardieres (FR)
(74) Mandataire: Cabinet Camus Lebkiri

(56) Documents cités:
- US-A- 6 044 335
- US-A1- 2009 271 152
- US-A1- 2013 006 569
- US-A1- 2014 282 503
- None

## Description

### DOMAINE TECHNIQUE DE L'INVENTION

La présente invention se rapporte au domaine technique des tests de performance d'applications informatiques. L'invention concerne plus particulièrement un procédé de détermination d'une quantité de ressources disponibles sur une infrastructure informatique de production, ladite quantité de ressources disponibles garantissant un niveau prédéterminé d'expérience utilisateur associée à une application informatique, l'application étant destinée à être mise en production sur ladite infrastructure de production.

### ARRIERE PLAN TECHNOLOGIQUE DE L'INVENTION

Avant le déploiement (la mise en production) d'une application informatique sur une infrastructure informatique donnée, une étape de test de performance (« benchmarck » en terminologie anglo-saxonne) est généralement nécessaire. Cette étape permet de déterminer si l'infrastructure est adaptée à l'application, et en particulier si ses ressources sont suffisantes pour procurer aux utilisateurs de l'application une « expérience utilisateur » satisfaisante.

On entend par « expérience utilisateur associée à une application informatique », le ressenti d'un utilisateur résultant de l'utilisation de l'application. Un certain nombre de métriques permettent de quantifier l'expérience utilisateur, dont les principales sont les temps de réponse à des requêtes envoyées à l'application.

Il existe, à cet égard, différents outils (ou logiciels) de test de performances permettant de simuler divers scénarios d'utilisation d'une application pour en déduire des données statistiques reflétant ses performances. Parmi ces outils, on cite l'outil JMeter, un logiciel libre édité par la Fondation Apache (http://jmeter.apache.org).

L'outil JMeter permet en effet d'effectuer des tests de performance d'applications informatiques selon différents protocoles (tels que HTTP/HTTPS, SMTP, etc). Pour cela, JMeter simule la charge d'une pluralité d'utilisateurs d'une application informatique cible, et subséquemment mesure un certain nombre de métriques de performances décrivant le comportement de l'application en réponse à cette charge, notamment des temps de réponse représentatifs de l'expérience utilisateur.

Le test de performance d'une application informatique se déroule généralement dans le cadre d'une campagne de tirs de recherche effectuée depuis un terminal utilisateur, sur lequel est installé le logiciel JMeter (ou plus généralement, tout autre moyen de test de charge) pour injecter, selon un scénario de test de charge prédéfini, des requêtes à destination de l'application informatique cible.

Afin de réaliser un test de performance qui représente au mieux une utilisation réelle d'une application en production sur une infrastructure, il importe que la consommation des ressources de l'infrastructure supportant l'application soit prise en compte lors des tests de performance. Or, à ce jour, aucun test ne permet de déterminer quelle quantité de ressources disponibles sur l'infrastructure permet de garantir un certain niveau d'expérience utilisateur.

US2009271152 décrit un procédé de test de performance d'un programme. Le test de performance est exécuté pendant qu'une charge étrangère au programme consomme des ressources. La quantité des ressources consommées par ces charges est variée est chaque fois la performance du programme est vérifiée.

### DESCRIPTION GENERALE DE L'INVENTION

L'invention a pour objet de déterminer une quantité de ressources disponible sur une infrastructure informatique garantissant un niveau prédéterminé d'expérience utilisateur pour une application informatique destinée à être mise en production sur ladite infrastructure.

A cette fin, l'invention se rapporte, selon un premier aspect, à un procédé de détermination d'une quantité de ressources disponibles d'une infrastructure informatique de production, ladite quantité de ressources disponibles garantissant un niveau prédéterminé d'expérience utilisateur associée à une application informatique, l'application étant destinée à être mise en production sur ladite infrastructure de production.

Le procédé comporte les étapes suivantes :
- déterminer (11) une quantité initiale de ressources (3, 4), supérieure ou égale à une quantité moyenne de ressources consommées sur l'infrastructure de production
- A: consommer la quantité initiale des ressources d'une infrastructure test, sur laquelle l'application est installée par l'exécution d'au moins un programme (7) installé sur l'infrastructure test (1), déclenchant des opérations consommant des ressources (3, 4) de l'infrastructure
- B : exécuter un scénario de test de charge, lors duquel une pluralité de requêtes sont envoyées à l'application installée sur l'infrastructure test
- C : mesurer un paramètre quantifiant l'expérience utilisateur, en fonction d'un rapport de scénario comportant des données relatives à des réponses auxdites requêtes
- D : si le paramètre mesuré est inférieur au niveau prédéterminé d'expérience utilisateur : diminuer la consommation des ressources de l'infrastructure test, puis réitérer les étapes B, C et D
- E : calculer la quantité de ressources disponibles garantissant le niveau prédéterminé d'expérience utilisateur, en fonction d'une quantité de ressources consommées pour laquelle le paramètre mesuré est supérieur ou égal au niveau prédéterminé d'expérience utilisateur, et d'une quantité totale de ressources de l'infrastructure de production.

L'infrastructure test est une infrastructure comportant des ressources équivalentes à celles de l'infrastructure de production. En effet, l'application informatique est testée sur l'infrastructure test avant d'être mise en production sur l'infrastructure de production.

Selon le procédé, tant que l'expérience utilisateur est de qualité inférieure au niveau prédéterminé, à chaque nouvelle itération du scénario de test la consommation de ressources de l'infrastructure est diminuée. Diminuer la consommation de ressources augmente progressivement l'expérience utilisateur jusqu'à obtenir une expérience utilisateur de qualité au moins égale au niveau prédéterminé.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Le procédé comporte une étape de détermination de la quantité initiale de ressources, qui soit supérieure ou égale à une quantité moyenne de ressources consommées sur l'infrastructure de production. Il importe en effet de stresser l'infrastructure de test au moins autant que l'est l'infrastructure de production, afin que l'application informatique soit testée dans des conditions au plus proche de celles de l'infrastructure de production.

Selon un mode de réalisation non limitatif, les données relatives aux réponses aux requêtes sont des temps de réponse. Les temps de réponses aux requêtes sont en effet des paramètres pertinents de quantification de l'expérience utilisateur.

Selon un mode de réalisation non limitatif, le procédé comprend une étape de comparaison des paramètres successifs mesurés lors de chaque itération de l'étape D. Ceci permet d'analyser la dérive des paramètres en fonction de la variation des ressources consommées dans l'infrastructure.

Selon un mode de réalisation non limitatif, la quantité de ressources consommées est diminuée d'une fraction de la quantité initiale lors de l'étape D. Lors de chaque itération du scénario de test de charge, les consommations de ressources dévient donc d'une fraction, configurable, de leur valeur initiale.

Selon un mode de réalisation non limitatif, le procédé comporte une étape d'archivage de la quantité de ressources disponibles calculée à l'étape E.

Selon un mode de réalisation non limitatif, le procédé comporte une étape de génération d'un rapport de test comprenant la quantité de ressources disponibles calculée à l'étape E.

L'invention se rapporte, selon un deuxième aspect, à un produit programme d'ordinateur implémenté sur un support mémoire, susceptible d'être mis en œuvre au sein d'une unité de traitement informatique, et comprenant des instructions pour la mise en œuvre du procédé présenté ci-dessus.

L'invention et ses différentes applications seront mieux comprises à la lecture de la description qui suit et à l'examen des figures qui l'accompagnent.

### BREVE DESCRIPTION DES FIGURES

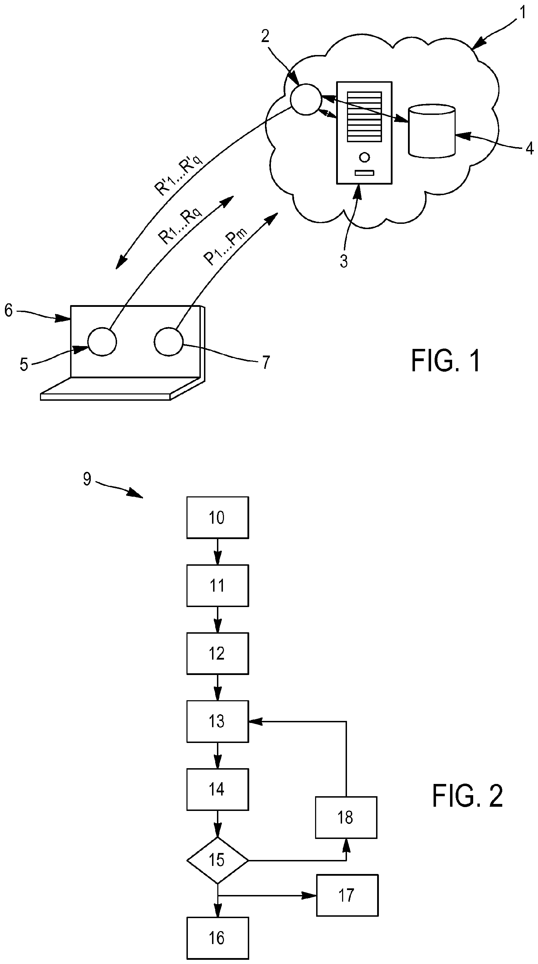

Les figures ne sont présentées qu'à titre indicatif et nullement limitatif de l'invention. Les figures montrent :
- A la figure 1, un contexte général de mise en œuvre du procédé selon un mode de réalisation de l'invention
- A la figure 2, des étapes du procédé selon un mode de réalisation de l'invention.

### DESCRIPTION DETAILLEE D'AU MOINS UN MODE DE REALISATION DE L'INVENTION

Sauf précision contraire, un même élément apparaissant sur des figures différentes présente une référence unique.

A la figure 1 est représentée une infrastructure informatique 1, dite test, permettant de simuler une infrastructure de production sur laquelle une application informatique 2 est destinée à être mise en production. On entend par infrastructure informatique, tout système d'information mettant en œuvre une ou plusieurs ressources matérielles, telles que des serveurs et/ou des bases de données, configurées pour mettre à la disposition de plusieurs utilisateurs au moins un service rendu par des ressources logicielles.

L'infrastructure informatique test 1 comporte donc des ressources matérielles et/ou logicielles. L'infrastructure informatique test comprend, par exemple, un ou plusieurs serveurs 3 et/ou bases de données 4 interconnectées et mettant en œuvre des applications informatiques telles qu'une application Web, une application de messagerie électronique, ou une plate-forme de calcul.

Un moyen de test de charge 5, installé sur un équipement utilisateur 6, est configuré pour exécuter un scénario de test de charge, afin de tester les performances de l'application informatique 2. L'application informatique 2 est installée et en phase de test sur l'infrastructure test 1. Le moyen de test de charge 5 est l'outil JMeter, toute version ultérieure de celui-ci, ou, plus généralement, tout moyen de test de charge de type JMeter.

L'équipement utilisateur 6 est un terminal utilisateur tel qu'un ordinateur ou, plus généralement, tout équipement utilisateur pouvant être connecté à l'infrastructure informatique test 1.

Le scénario de test de charge comprend un enchaînement d'actions (ou requêtes) R1, ...Rq, à exécuter par le moyen de test de charge 5. Le moyen de test de charge 5 est configuré pour stresser, suivant le scénario de test de charge, l'infrastructure informatique test 1 via une injection de charge à destination de l'application informatique 2. Le moyen de test de charge 5 injecte donc du traffic (c'est-à-dire de la charge) vers les ressources 3, 4 matérielles et/ou logicielles de l'infrastructure informatique test 1 utilisées par l'application informatique 2. Le moyen de test de charge 5 mesure en conséquence des données de performances de cette application informatique 2.

Par ailleurs, des programmes 7 dont l'exécution génère une consommation des ressources matérielles et/ou logicielles 3, 4 de l'infrastructure test 1 sont installés sur l'équipement utilisateur 6. Par exemple, un programme 7 configuré pour envoyer des paquets de données P1, ...Pm sur un port particulier d'un serveur 3 de l'infrastructure test 1 génère une consommation d'une ressource réseau.

Les programmes 7 permettent de simuler une consommation des ressources 3, 4 de l'infrastructure test 1 qui aurait lieu en parallèle d'une consommation des ressources 3, 4 relative à une utilisation de l'application informatique 2. On considère donc que les programmes 7 permettent de générer une charge parasite sur les ressources 3, 4 de l'infrastructure test 1, tandis que le moyen de test de charge 5 permet de générer une charge métier.

L'exécution des programmes 7 est planifiée : un ordonnanceur est configuré pour déclencher l'exécution des programmes 7 avant, simultanément, ou après le lancement du scénario de test de charge, puis arrêter l'exécution des programmes 7 à la fin du scénario de test de charge.

La figure 2 représente des étapes d'un procédé 9 selon un mode de réalisation de l'invention, explicitées ci-dessous :
- Selon une étape 10, un niveau d'expérience utilisateur seuil relatif à l'application informatique 2 est fixé. Ce niveau correspond avantageusement à une expérience utilisateur seuil jugée satisfaisante. Dans le mode de réalisation décrit, ce niveau est composé d'une pluralité de temps de réponses seuils à la pluralité de requêtes R1, ...Rq du scénario de test de charge.
- Selon une étape 11, une quantité initiale de ressources 3, 4 à consommer sur l'infrastructure test 1 est fixée. Cette quantité initiale est au moins équivalente à celle présente sur l'infrastructure de production.
- Selon une étape 12, la quantité initiale des ressources de l'infrastructure test fixée est consommée au moyen des programmes 7.
- Selon une étape 13, le scénario de test de charge est lancé : les requêtes R1, ...Rq, à destination de l'application informatique 2 installée sur l'infrastructure test 1, sont exécutées par le moyen de test de charge 5. On note que l'étape 13 peut avoir lieu avant, simultanément, ou après l'étape 12.
- Selon une étape 14, le moyen de test de charge 5 génère un rapport de test comprenant notamment des mesures de temps de réponse R'1, ...R'q aux requêtes R1, ...Rq.
- Selon une étape 15, les temps de réponse mesurés sont comparés aux temps de réponse seuils prédéfinis à l'étape 10.
   - Si les temps de réponse mesurés sont inférieurs ou égaux aux temps de réponse seuils prédéfinis, alors on considère que l'expérience utilisateur est au moins aussi bonne que l'expérience utilisateur seuil souhaitée. Cela signifie que la quantité initiale de ressources disponibles, déductible et calculée à partir de la quantité initiale de ressources consommées selon l'étape 11, est suffisante pour permettre une expérience utilisateur de qualité. Dans ce cas, un rapport de test comprenant les résultats du test, et notamment la quantité de ressources disponibles calculée, est généré selon une étape 16, et archivé selon une étape 17. Le procédé s'achève.
   - Si les temps de réponse mesurés sont supérieurs aux temps de réponse seuils prédéfinis, alors on considère que l'expérience utilisateur est moins bonne que l'expérience utilisateur seuil souhaitée. Cela signifie que la quantité initiale de ressources disponibles, déductible et calculée à partir de la quantité initiale de ressources consommées selon l'étape 11, est insuffisante pour permettre une expérience utilisateur de qualité. Dans ce cas, selon une étape 18, la consommation des ressources de l'infrastructure test 1 est diminuée, afin d'améliorer l'expérience utilisateur. Puis, les étapes 13, 14 et 15 sont réitérées : le scénario de test de charge est relancé, un nouveau rapport de test de charge est généré par le moyen de test de charge 5, et les nouveaux temps de réponse mesurés sont comparés aux temps de réponse seuils prédéfinis à l'étape 10. Si les nouveaux temps de réponse mesurés sont inférieurs ou égaux aux temps de réponse seuils prédéfinis, alors l'étape 16 et l'étape 17 sont réalisées. Sinon, la consommation des ressources de l'infrastructure test 1 est à nouveau diminuée, jusqu'à obtenir une quantité de ressources disponibles telle que les temps de réponse mesurés soient inférieurs ou égaux aux temps de réponse seuils prédéfinis.

Ce procédé permet d'observer la dérive des temps de réponse, et donc de l'expérience utilisateur, en fonction de l'évolution de la consommation de ressources.

Naturellement, l'invention n'est pas limitée au mode de réalisation décrit en référence aux figures, et des variantes pourraient être envisagées.

## Revendications

1. Procédé (9) de détermination d'une quantité de ressources disponibles d'une infrastructure informatique de production, ladite quantité de ressources disponibles garantissant un niveau prédéterminé d'expérience utilisateur associée à une application informatique (2), l'application (2) étant destinée à être mise en production sur ladite infrastructure de production, le procédé (9) comportant les étapes suivantes :
- déterminer (11) une quantité initiale de ressources (3,4), supérieure ou égale à une quantité moyenne de ressources consommées sur l'infrastructure de production
- A : consommer (12) la quantité initiale des ressources (3, 4) d'une infrastructure test (1) sur laquelle l'application (2) est installée par l'exécution d'au moins un programme (7) installé sur l'infrastructure test (1), déclenchant des opérations consommant des ressources (3, 4) de l'infrastructure
- B : exécuter (13) un scénario de test de charge, lors duquel une pluralité de requêtes (R1, ...Rq) sont envoyées à l'application (2) installée sur l'infrastructure test (1)
- C : mesurer (14) un paramètre quantifiant l'expérience utilisateur, en fonction d'un rapport de scénario comportant des données relatives à des réponses (R'1, ...R'q) auxdites requêtes (R1, ...Rq)
- D : si (15) le paramètre mesuré est inférieur au niveau prédéterminé d'expérience utilisateur : diminuer la consommation des ressources (3, 4) de l'infrastructure test (1), puis réitérer les étapes B, C et D
- E : calculer (16) la quantité de ressources disponibles garantissant le niveau prédéterminé d'expérience utilisateur, en fonction d'une quantité de ressources consommées pour laquelle le paramètre mesuré est supérieur ou égal au niveau prédéterminé d'expérience utilisateur, et d'une quantité totale de ressources de l'infrastructure de production.

2. Procédé (9) selon la revendication précédente, dans lequel les données relatives aux réponses (R'1, ...R'q) aux requêtes (R1, ...Rq) sont des temps de réponse.

3. Procédé (9) selon l'une des revendications précédentes, comprenant une étape de comparaison des paramètres successifs mesurés lors de chaque itération de l'étape D.

4. Procédé (9) selon l'une des revendications précédentes, dans lequel la quantité de ressources consommées est diminuée d'une fraction de la quantité initiale lors de l'étape D.

5. Procédé (9) selon l'une des revendications précédentes, comportant une étape d'archivage (17) de la quantité de ressources disponibles calculée à l'étape E.

6. Procédé (9) selon l'une des revendications précédentes, comportant une étape de génération (16) d'un rapport de test comprenant la quantité de ressources disponibles calculée à l'étape E.

7. Produit programme d'ordinateur implémenté sur un support mémoire, susceptible d'être mis en œuvre au sein d'une unité de traitement informatique, et comprenant des instructions pour la mise en œuvre d'un procédé (9) selon l'une des revendications 1 à 6.

## Patentansprüche

1. Verfahren (9) zur Bestimmung einer Menge an verfügbaren Ressourcen einer Produktions-IT-Infrastruktur, wobei die Menge an verfügbaren Ressourcen ein vorbestimmtes Niveau an Nutzererfahrung in Verbindung mit einer IT-Anwendung (2) garantiert, wobei die Anwendung (2) auf der Produktionsinfrastruktur in Produktion gehen soll, wobei das Verfahren (9) die folgenden Schritte umfasst:
- Bestimmen (11) einer anfänglichen Menge an Ressourcen (3, 4), die größer oder gleich einer durchschnittlichen Menge an Ressourcen ist, die in der Produktionsinfrastruktur verbraucht werden
- A: Verbrauchen (12) der anfänglichen Menge an Ressourcen (3, 4) einer Testinfrastruktur (1), auf der die Anwendung (2) installiert ist, durch die Ausführung mindestens eines Programms (7), das auf der Testinfrastruktur (1) installiert ist, indem Vorgänge, die Infrastrukturressourcen (3, 4) verbrauchen, ausgelöst werden
- B: Ausführen (13) eines Belastungstestszenarios, bei dem mehrere Anfragen (R1, ... Rq) an die auf der Testinfrastruktur (1) installierte Anwendung (2) gesendet werden.
- C : Messen (14) eines Parameters, der die Nutzererfahrung quantifiziert, in Abhängigkeit eines Szenarioberichts, der Daten in Bezug auf Antworten (R'1, ... R'q) auf die Anfragen (R1, ... Rq) umfasst.
- D: wenn (15) der gemessene Parameter niedriger ist als das vorgegebene Niveau der Nutzererfahrung: Reduzieren des Ressourcenverbrauchs (3, 4) der Testinfrastruktur (1), dann Wiederholen der Schritte B, C und D
- E: Berechnen (16) der Menge an verfügbaren Ressourcen, die das vorbestimmte Niveau der Nutzererfahrung garantieren, in Abhängigkeit einer Menge verbrauchter Ressourcen, für die der gemessene Parameter größer oder gleich dem vorbestimmten Niveau der Nutzererfahrung ist, und einer Gesamtmenge der Ressourcen der Produktionsinfrastruktur.

2. Verfahren (9) nach dem vorstehenden Anspruch, bei dem die Daten in Bezug auf die Antworten (R'1, ... R'q) auf die Anfragen (R1, ... Rq) Antwortzeiten sind.

3. Verfahren (9) nach einem der vorstehenden Ansprüche, umfassend einen Schritt des Vergleichens der aufeinanderfolgenden Parameter, die während jeder Iteration von Schritt D gemessen wurden.

4. Verfahren (9) nach einem der vorstehenden Ansprüche, bei dem die Menge an verbrauchten Ressourcen während des Schrittes D um einen Bruchteil der anfänglichen Menge reduziert wird.

5. Verfahren (9) nach einem der vorstehenden Ansprüche, umfassend einen Archivierungsschritt (17) der in Schritt E berechneten Menge an verfügbaren Ressourcen.

6. Verfahren (9) nach einem der vorstehenden Ansprüche, umfassend einen Schritt des Erzeugens (16) eines Testberichts, der die in Schritt E berechnete Menge an verfügbaren Ressourcen umfasst.

7. Auf einem Speichermedium implementiertes Computerprogrammprodukt, das in einer Computerverarbeitungseinheit implementiert werden kann und Anweisungen zur Umsetzung eines Verfahrens (9) nach einem der Ansprüche 1 bis 6 umfasst.

## Claims

1. A method (9) for determining a quantity of available resources of a production computing infrastructure, said quantity of available resources guaranteeing a predetermined level of user experience associated with a computer application (2), the application (2) being intended to enter production on said production infrastructure, the method (9) comprising the following steps:
- determining (11) an initial quantity of resources (3,4), greater than or equal to an average quantity of resources consumed on the production infrastructure
- A: consuming (12) the initial quantity of resources (3, 4) of a testing infrastructure (1) on which the application (2) is installed by running at least one program (7) installed on the testing infrastructure (1), triggering operations that consume the resources (3, 4) of the infrastructure
- B: running (13) a load testing scenario, during which a plurality of queries (R1, ...Rq) are sent to the application (2) installed on the testing infrastructure (1)
- C: measuring (14) a parameter quantifying user experience, based on a scenario report comprising data related to responses (R'1, ...R'q) to said queries (R1, ...Rq)
- D: if (15) the measured parameter is less than the predetermined level of user experience: decreasing the consumption of the resources (3, 4) of the testing infrastructure (1), then repeat steps B, C, and D
- E: calculating (16) the quantity of available resources that guarantee the predetermined level of user experience, based on a quantity of consumed resources for which the measured parameter is greater than or equal to the predetermined level of user experience, and on a total quantity of production infrastructure resources.

2. A method (9) according to the preceding claim, wherein the data related to the responses (R'1, ...R'q) to the queries (R1, ...Rq) are response times.

3. A method (9) according to one of the preceding claims, comprising a step of comparing successive parameters measured during each iteration of step D.

4. A method (9) according to one of the preceding claims, wherein the quantity of resources consumed is decreased by a fraction of the initial quantity during step D.

5. A method (9) according to one of the preceding claims, comprising a step of archiving (17) the quantity of available resources calculated in step E.

6. A method (9) according to one of the preceding claims, comprising a step of generating (16) a test report comprising the quantity of available resources calculated in step E.

7. A computer program product implemented on a memory medium, which can be implemented within a computer processing unit, and comprising instructions for implementing a method (9) according to one of the claims 1 to 6.
